# EUROPEAN PATENT APPLICATION

(11) **EP 4 407 949 A2**
(43) Date of publication of application: **31.07.2024**
(21) Application number: 24181817.8
(22) Date of filing: 23.07.2021
(51) Int. Cl.: H04L 47/34

(54) **API-CONTROLLED PDCP OUT-OF-ORDER CONTROL AND DELIVERY FOR DOWNLINK TRAFFIC**

(30) Priority: 31.07.2020 US 202063059913 P; 22.07.2021 US 202117383166
(62) Divisional of application: 21759445.6
(71) Applicant: QUALCOMM Incorporated, San Diego, CA 92121-1714 (US)
(72) Inventor: HANDE, Prashanth Haridas, San Diego, 92121 (US); WEEKS, Karen Yvonne, San Diego, 92121 (US); AGARWAL, Ravi, San Diego, 92121 (US); TINNAKORNSRISUPHAP, Peerapol, San Diego, 92121 (US); ZACHARIAS, Leena, San Diego, 92121 (US); HANSWAL, Pulkit, San Diego, 92121 (US); MEYLAN, Arnaud, San Diego, 92121 (US); SANTHANAM, Arvind Vardarajan, San Diego, 92121 (US); KHANDELWAL, Deepak, San Diego, 92121 (US); COHEN-ARAZI, Yacob, San Diego, 92121 (US)
(74) Representative: Tomkins & Co

(57) **Abstract**

Aspects are directed towards activating out-of-order delivery (OOOD) on a user equipment (UE). An application programming interface (API) on the UE may set one or more configuration parameters for IP flows from the wireless network. The UE may then measure the IP flows from the wireless network, traffic flow templates (TFTs), and/or quality-of service flows (QFI) to identify measured IP flows from the wireless network meet the one or more configuration parameters. The UE may then activate OOOD for the IP flows from the wireless network that meet the one or more configuration parameters.

## Description

### CROSS-REFERENCE TO RELATED APPLICATIONS

This application for Patent claims priority to and the benefit of Non-Provisional Patent Application Serial No. 17/383,166 filed in the United States Patent Office on July 22, 2021 and Provisional Patent Application Serial No. 63/059,913 filed in the United States Patent Office on July 31, 2020, the entire content of which is incorporated herein as if fully set forth below in its entirety and for all applicable purposes.

### TECHNICAL FIELD

The technology discussed below relates generally to wireless communication systems, and more particularly, to monitoring data flows to activate out-of-order delivery (OOOD) transmissions on a user equipment (UE).

### INTRODUCTION

Within a wireless communication network, Quality of Service (QoS) refers to a set of technologies that enable the network to meet specific performance parameters (e.g., reliability and/or target delay). Such QoS technologies achieve these performance parameters by applying different handling to different traffic flows in the network. For example, each flow may be assigned a particular QoS, which assists the network in determining, among other things, the order in which packets from each of the flows are handled and the amount of bandwidth allocated to each flow. Each QoS flow may further be mapped to a data radio bearer (DRB) established between a user equipment (UE) and a base station.

### BRIEF SUMMARY OF SOME EXAMPLES

The following presents a summary of one or more aspects of the present disclosure, in order to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a form as a prelude to the more detailed description that is presented later.

In some examples, a method is disclosed for a user equipment (UE) to communicate with a wireless network, where the method may include executing an application programming interface (API) in the UE to set one or more configuration parameters from the wireless network, identifying data from the wireless network that matches the one or more configuration parameters via the API; and activating out-of-order delivery (OOOD) for the data from the wireless network that matches the one or more configuration parameters via the API.

In some examples, a user equipment (UE) in a wireless communication network is disclosed, wherein the UE includes a wireless transceiver, a memory, and a processor communicatively coupled to the wireless transceiver and the memory. The processor and the memory may be configured to execute an application programming interface (API) in the UE to set one or more configuration parameters from the wireless network, identify data from the wireless network that matches the one or more configuration parameters via the API, and activate out-of-order delivery (OOOD) for the data from the wireless network that matches the one or more configuration parameters via the API.

In some examples, a user equipment (UE) in a wireless network is disclosed, wherein the UE may include means for executing an application programming interface (API) in the UE to set one or more configuration parameters from the wireless network; means for identifying data from the wireless network that matches the one or more configuration parameters via the API; and means for activating out-of-order delivery (OOOD) for the data from the wireless network that matches the one or more configuration parameters via the API.

In some examples, a non-transitory computer-readable medium is disclosed, having stored therein instructions executable by one or more processors of a user equipment (UE) in a wireless communication network to execute an application programming interface (API) in the UE to set one or more configuration parameters from the wireless network; identify data from the wireless network that matches the one or more configuration parameters via the API; and activate out-of-order delivery (OOOD) for the data from the wireless network that matches the one or more configuration parameters via the API.

These and other aspects of the invention will become more fully understood upon a review of the detailed description, which follows. Other aspects, features, and examples of the present invention will become apparent to those of ordinary skill in the art, upon reviewing the following description of specific, exemplary examples of the present invention in conjunction with the accompanying figures. While features of the present invention may be discussed relative to certain examples and figures below, all examples of the present invention can include one or more of the advantageous features discussed herein. In other words, while one or more examples may be discussed as having certain advantageous features, one or more of such features may also be used in accordance with the various examples of the invention discussed herein. In similar fashion, while exemplary examples may be discussed below as device, system, or method examples it should be understood that such exemplary examples can be implemented in various devices, systems, and methods.

### BRIEF DESCRIPTION OF THE DRAWINGS

FIG. 1 is a schematic illustration of a wireless communication system in accordance with some aspects of the present disclosure.
FIG. 2 is a conceptual illustration of an example of a radio access network in accordance with some aspects of the present disclosure.
FIG. 3 is a diagram illustrating an example of a radio protocol architecture for the user and control plane in accordance with some aspects of the present disclosure.
FIG. 4 is a diagram illustrating an exemplary Quality of Service (QoS) architecture in accordance with some aspects of the present disclosure.
FIG. 5 illustrates a simplified block diagram of a wireless system for mapping low-latency flows in accordance with some aspects of the present disclosure.
FIG. 6 illustrates another simplified block diagram of a wireless system for mapping low-latency flows in accordance with some aspects of the present disclosure.
FIG. 7 illustrates another simplified block diagram of a wireless system for mapping low-latency flows in accordance with some aspects of the present disclosure.
FIG. 8 is a block diagram illustrating an example of a hardware implementation for a scheduled entity employing a processing system in accordance with some aspects of the present disclosure.
FIG. 9 is a block diagram illustrating an example of a hardware implementation for a scheduling entity employing a processing system in accordance with some aspects of the present disclosure.
FIG. 10 illustrates a method for measuring and detecting characteristics of transmission control protocol (TCP) traffic on the radio bearer for UE-based PDCP-OOOD control in accordance with some aspects of the present disclosure.
FIG. 11 illustrates a method for a UE to communicate with a wireless network, in accordance with some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

While aspects and examples are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, aspects and/or uses may come about via integrated chip examples and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or OEM devices or systems incorporating one or more aspects of the described innovations. In some practical settings, devices incorporating described aspects and features may also necessarily include additional components and features for implementation and practice of claimed and described examples. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes and constitution.

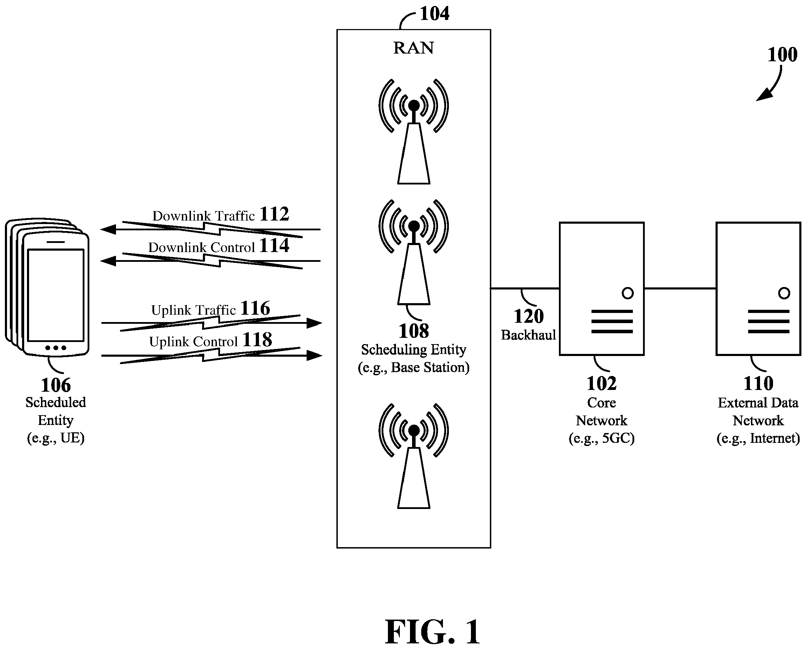

The various concepts presented throughout this disclosure may be implemented across a broad variety of telecommunication systems, network architectures, and communication standards. Referring now to FIG. 1, as an illustrative example without limitation, various aspects of the present disclosure are illustrated with reference to a wireless communication system 100. The wireless communication system 100 includes three interacting domains: a core network 102, a radio access network (RAN) 104, and a user equipment (UE) 106. By virtue of the wireless communication system 100, the UE 106 may be enabled to carry out data communication with an external data network 110, such as (but not limited to) the Internet.

The RAN 104 may implement any suitable wireless communication technology or technologies to provide radio access to the UE 106. As one example, the RAN 104 may operate according to 3^{rd} Generation Partnership Project (3GPP) New Radio (NR) specifications, often referred to as 5G. As another example, the RAN 104 may operate under a hybrid of 5G NR and Evolved Universal Terrestrial Radio Access Network (eUTRAN) standards, often referred to as Long Term Evolution (LTE). The 3GPP refers to this hybrid RAN as a next-generation RAN, or NG-RAN. Of course, many other examples may be utilized within the scope of the present disclosure.

As illustrated, the RAN 104 includes a plurality of base stations 108. Broadly, a base station is a network element in a radio access network responsible for radio transmission and reception in one or more cells to or from a UE. In different technologies, standards, or contexts, a base station may variously be referred to by those skilled in the art as a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), or some other suitable terminology. In some examples, a base station may include two or more TRPs that may be collocated or non-collocated. Each TRP may communicate on the same or different carrier frequency within the same or different frequency band. In examples where the RAN 104 operates according to both the LTE and 5G NR standards, one of the base stations may be an LTE base station, while another base station may be a 5G NR base station.

The RAN 104 is further illustrated supporting wireless communication for multiple mobile apparatuses. A mobile apparatus may be referred to as user equipment (UE) in 3GPP standards, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. A UE may be an apparatus (e.g., a mobile apparatus) that provides a user with access to network services.

Within the present disclosure, a "mobile" apparatus need not necessarily have a capability to move and may be stationary. The term mobile apparatus or mobile device broadly refers to a diverse array of devices and technologies. UEs may include a number of hardware structural components sized, shaped, and arranged to help in communication; such components can include antennas, antenna arrays, RF chains, amplifiers, one or more processors, etc. electrically coupled to each other. For example, some non-limiting examples of a mobile apparatus include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of things" (IoT).

A mobile apparatus may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. A mobile apparatus may additionally be a digital home or smart home device such as a home audio, video, and/or multimedia device, an appliance, a vending machine, intelligent lighting, a home security system, a smart meter, etc. A mobile apparatus may additionally be a smart energy device, a security device, a solar panel or solar array, a municipal infrastructure device controlling electric power (e.g., a smart grid), lighting, water, etc., an industrial automation and enterprise device, a logistics controller, and/or agricultural equipment, etc. Still further, a mobile apparatus may provide for connected medicine or telemedicine support, e.g., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

Wireless communication between the RAN 104 and the UE 106 may be described as utilizing an air interface. Transmissions over the air interface from a base station (e.g., base station 108) to one or more UEs (e.g., similar to UE 106) may be referred to as downlink (DL) transmission. In accordance with certain aspects of the present disclosure, the term downlink may refer to a point-to-multipoint transmission originating at a base station (e.g., base station 108). Another way to describe this scheme may be to use the term broadcast channel multiplexing. Transmissions from a UE (e.g., UE 106) to a base station (e.g., base station 108) may be referred to as uplink (UL) transmissions. In accordance with further aspects of the present disclosure, the term uplink may refer to a point-to-point transmission originating at a UE (e.g., UE 106).

In some examples, access to the air interface may be scheduled, wherein a scheduling entity (e.g., a base station 108) allocates resources for communication among some or all devices and equipment within its service area or cell. Within the present disclosure, as discussed further below, the scheduling entity may be responsible for scheduling, assigning, reconfiguring, and releasing resources for one or more scheduled entities (e.g., UEs 106). That is, for scheduled communication, a plurality of UEs 106, which may be scheduled entities, may utilize resources allocated by the scheduling entity 108.

Base stations 108 are not the only entities that may function as scheduling entities. That is, in some examples, a UE may function as a scheduling entity, scheduling resources for one or more scheduled entities (e.g., one or more other UEs). For example, UEs may communicate directly with other UEs in a peer-to-peer or device-to-device fashion and/or in a relay configuration.

As illustrated in FIG. 1, a scheduling entity 108 may broadcast downlink traffic 112 to one or more scheduled entities (e.g., one or more UEs 106). Broadly, the scheduling entity 108 is a node or device responsible for scheduling traffic in a wireless communication network, including the downlink traffic 112 and, in some examples, uplink traffic 116 from one or more scheduled entities (e.g., one or more UEs 106) to the scheduling entity 108. On the other hand, the scheduled entity (e.g., a UE 106) is a node or device that receives downlink control information 114, including but not limited to scheduling information (e.g., a grant), synchronization or timing information, or other control information from another entity in the wireless communication network such as the scheduling entity 108.

In addition, the uplink and/or downlink control information and/or traffic information may be transmitted on a waveform that may be time-divided into frames, subframes, slots, and/or symbols. As used herein, a symbol may refer to a unit of time that, in an orthogonal frequency division multiplexed (OFDM) waveform, carries one resource element (RE) per sub-carrier. A slot may carry 7 or 14 OFDM symbols. A subframe may refer to a duration of 1ms. Multiple subframes or slots may be grouped together to form a single frame or radio frame. Within the present disclosure, a frame may refer to a predetermined duration (e.g., 10 ms) for wireless transmissions, with each frame consisting of, for example, 10 subframes of 1 ms each. Of course, these definitions are not required, and any suitable scheme for organizing waveforms may be utilized, and various time divisions of the waveform may have any suitable duration.

In general, base stations 108 may include a backhaul interface for communication with a backhaul portion 120 of the wireless communication system 100. The backhaul portion 120 may provide a link between a base station 108 and the core network 102. Further, in some examples, a backhaul network may provide interconnection between the respective base stations 108. Various types of backhaul interfaces may be employed, such as a direct physical connection, a virtual network, or the like using any suitable transport network.

The core network 102 may be a part of the wireless communication system 100 and may be independent of the radio access technology used in the RAN 104. In some examples, the core network 102 may be configured according to 5G standards (e.g., 5GC). In other examples, the core network 102 may be configured according to a 4G evolved packet core (EPC), or any other suitable standard or configuration.

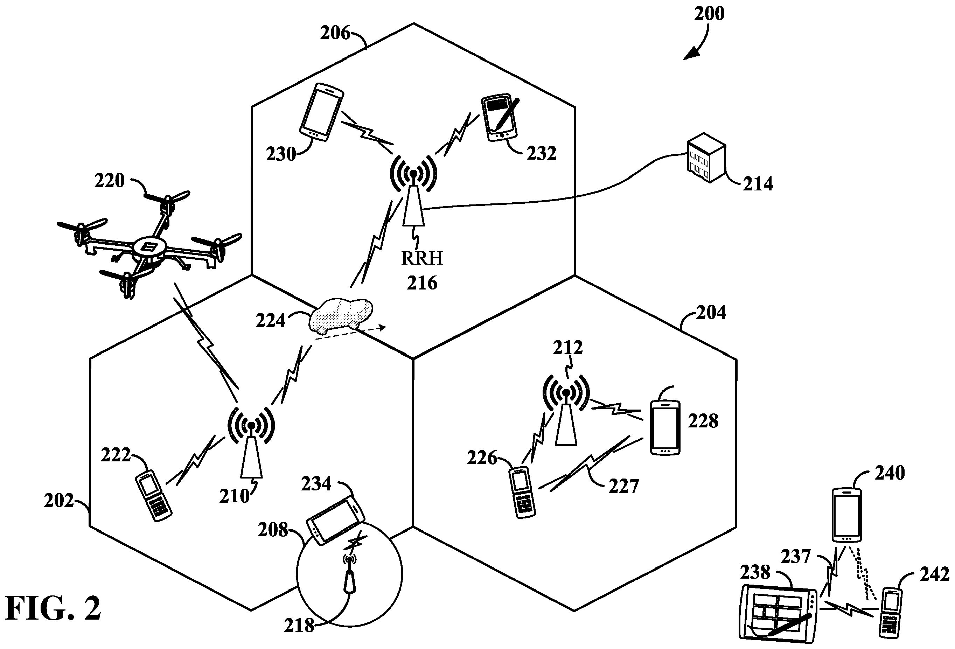

Referring now to FIG. 2, as an illustrative example without limitation, a schematic illustration of a radio access network (RAN) 200 according to some aspects of the present disclosure is provided. In some examples, the RAN 200 may be the same as the RAN 104 described above and illustrated in FIG. 1.

The geographic region covered by the RAN 200 may be divided into a number of cellular regions (cells) that can be uniquely identified by a user equipment (UE) based on an identification broadcasted over a geographical area from one access point or base station. FIG. 2 illustrates cells 202, 204, 206, and 208, each of which may include one or more sectors (not shown). A sector is a sub-area of a cell. All sectors within one cell are served by the same base station. A radio link within a sector can be identified by a single logical identification belonging to that sector. In a cell that is divided into sectors, the multiple sectors within a cell can be formed by groups of antennas with each antenna responsible for communication with UEs in a portion of the cell.

Various base station arrangements can be utilized. For example, in FIG. 2, two base stations, base station 210 and base station 212 are shown in cells 202 and 204. A third base station, base station 214 is shown controlling a remote radio head (RRH) 216 in cell 206. That is, a base station can have an integrated antenna or can be connected to an antenna or RRH 216 by feeder cables. In the illustrated example, cells 202, 204, and 206 may be referred to as macrocells, as the base stations 210, 212, and 214 support cells having a large size. Further, a base station 218 is shown in the cell 208, which may overlap with one or more macrocells. In this example, the cell 208 may be referred to as a small cell (e.g., a microcell, picocell, femtocell, home base station, home Node B, home eNode B, etc.), as the base station 218 supports a cell having a relatively small size. Cell sizing can be done according to system design as well as component constraints.

It is to be understood that the RAN 200 may include any number of wireless base stations and cells. Further, a relay node may be deployed to extend the size or coverage area of a given cell. The base stations 210, 212, 214, 218 provide wireless access points to a core network for any number of mobile apparatuses. In some examples, the base stations 210, 212, 214, and/or 218 may be the same as or similar to the scheduling entity 108 described above and illustrated in FIG. 1.

FIG. 2 further includes an unmanned aerial vehicle (UAV) 220, which may be a drone or quadcopter. The UAV 220 may be configured to function as a base station, or more specifically as a mobile base station. That is, in some examples, a cell may not necessarily be stationary, and the geographic area of the cell may move according to the location of a mobile base station, such as the UAV 220.

Within the RAN 200, the cells may include UEs that may be in communication with one or more sectors of each cell. Further, each base station 210, 212, 214, 218, and 220 may be configured to provide an access point to a core network 102 (see FIG. 1) for all the UEs in the respective cells. For example, UEs 222 and 224 may be in communication with base station 210; UEs 226 and 228 may be in communication with base station 212; UEs 230 and 232 may be in communication with base station 214 by way of RRH 216; UE 234 may be in communication with base station 218; and UE 236 may be in communication with mobile base station 220. In some examples, the UEs 222, 224, 226, 228, 230, 232, 234, 236, 238, 240, and/or 242 may be the same as or similar to the UE/scheduled entity 106 described above and illustrated in FIG. 1. In some examples, the UAV 220 (e.g., the quadcopter) can be a mobile network node and may be configured to function as a UE. For example, the UAV 220 may operate within cell 202 by communicating with base station 210.

In a further aspect of the RAN 200, sidelink signals may be used between UEs without necessarily relying on scheduling or control information from a base station. Sidelink communication may be utilized, for example, in a device-to-device (D2D) network, peer-to-peer (P2P) network, vehicle-to-vehicle (V2V) network, vehicle-to-everything (V2X) network, and/or other suitable sidelink network. For example, two or more UEs (e.g., UEs 238, 240, and 242) may communicate with each other using sidelink signals 237 without relaying that communication through a base station. In some examples, the UEs 238, 240, and 242 may each function as a scheduling entity or transmitting sidelink device and/or a scheduled entity or a receiving sidelink device to schedule resources and communicate sidelink signals 237 therebetween without relying on scheduling or control information from a base station. In other examples, two or more UEs (e.g., UEs 226 and 228) within the coverage area of a base station (e.g., base station 212) may also communicate sidelink signals 227 over a direct link (sidelink) without conveying that communication through the base station 212. In this example, the base station 212 may allocate resources to the UEs 226 and 228 for the sidelink communication.

In order for transmissions over the air interface to obtain a low block error rate (BLER) while still achieving very high data rates, channel coding may be used. That is, wireless communication may generally utilize a suitable error correcting block code. In a typical block code, an information message or sequence is split up into code blocks (CBs), and an encoder (e.g., a CODEC) at the transmitting device then mathematically adds redundancy to the information message. Exploitation of this redundancy in the encoded information message can improve the reliability of the message, enabling correction for any bit errors that may occur due to the noise.

Data coding may be implemented in multiple manners. In early 5G NR specifications, user data is coded using quasi-cyclic low-density parity check (LDPC) with two different base graphs: one base graph is used for large code blocks and/or high code rates, while the other base graph is used otherwise. Control information and the physical broadcast channel (PBCH) are coded using Polar coding, based on nested sequences. For these channels, puncturing, shortening, and repetition are used for rate matching.

Aspects of the present disclosure may be implemented utilizing any suitable channel code. Various implementations of base stations and UEs may include suitable hardware and capabilities (e.g., an encoder, a decoder, and/or a CODEC) to utilize one or more of these channel codes for wireless communication.

In the RAN 200, the ability of UEs to communicate while moving, independent of their location, is referred to as mobility. The various physical channels between the UE and the RAN 200 are generally set up, maintained, and released under the control of an access and mobility management function (AMF). In some scenarios, the AMF may include a security context management function (SCMF) and a security anchor function (SEAF) that performs authentication. The SCMF can manage, in whole or in part, the security context for both the control plane and the user plane functionality.

In various aspects of the disclosure, the RAN 200 may utilize DL-based mobility or UL-based mobility to enable mobility and handovers (i.e., the transfer of a UE's connection from one radio channel to another). In a network configured for DL-based mobility, during a call with a scheduling entity, or at any other time, a UE may monitor various parameters of the signal from its serving cell as well as various parameters of neighboring cells. Depending on the quality of these parameters, the UE may maintain communication with one or more of the neighboring cells. During this time, if the UE moves from one cell to another, or if signal quality from a neighboring cell exceeds that from the serving cell for a given amount of time, the UE may undertake a handoff or handover from the serving cell to the neighboring (target) cell. For example, the UE 224 may move from the geographic area corresponding to its serving cell 202 to the geographic area corresponding to a neighbor cell 206. When the signal strength or quality from the neighbor cell 206 exceeds that of its serving cell 202 for a given amount of time, the UE 224 may transmit a reporting message to its serving base station 210 indicating this condition. In response, the UE 224 may receive a handover command, and the UE may undergo a handover to the cell 206.

In a network configured for UL-based mobility, UL reference signals from each UE may be utilized by the network to select a serving cell for each UE. In some examples, the base stations 210, 212, and 214/216 may broadcast unified synchronization signals (e.g., unified Primary Synchronization Signals (PSSs), unified Secondary Synchronization Signals (SSSs) and unified Physical Broadcast Channels (PBCH)). The UEs 222, 224, 226, 228, 230, and 232 may receive the unified synchronization signals, derive the carrier frequency, and slot timing from the synchronization signals, and in response to deriving timing, transmit an uplink pilot or reference signal. The uplink pilot signal transmitted by a UE (e.g., UE 224) may be concurrently received by two or more cells (e.g., base stations 210 and 214/216) within the RAN 200. Each of the cells may measure a strength of the pilot signal, and the radio access network (e.g., one or more of the base stations 210 and 214/216 and/or a central node within the core network) may determine a serving cell for the UE 224. As the UE 224 moves through the RAN 200, the RAN 200 may continue to monitor the uplink pilot signal transmitted by the UE 224. When the signal strength or quality of the pilot signal measured by a neighboring cell exceeds that of the signal strength or quality measured by the serving cell, the RAN 200 may handover the UE 224 from the serving cell to the neighboring cell, with or without informing the UE 224.

Although the synchronization signal transmitted by the base stations 210, 212, and 214/216 may be unified, the synchronization signal may not identify a particular cell, but rather may identify a zone of multiple cells operating on the same frequency and/or with the same timing. The use of zones in 5G networks or other next generation communication networks enables the uplink-based mobility framework and improves the efficiency of both the UE and the network, since the number of mobility messages that need to be exchanged between the UE and the network may be reduced.

In various implementations, the air interface in the radio access network 200 may utilize licensed spectrum, unlicensed spectrum, or shared spectrum. Licensed spectrum provides for exclusive use of a portion of the spectrum, generally by virtue of a mobile network operator purchasing a license from a government regulatory body. Unlicensed spectrum provides for shared use of a portion of the spectrum without need for a government-granted license. While compliance with some technical rules is generally still required to access unlicensed spectrum, generally, any operator or device may gain access. Shared spectrum may fall between licensed and unlicensed spectrum, wherein technical rules or limitations may be required to access the spectrum, but the spectrum may still be shared by multiple operators and/or multiple RATs. For example, the holder of a license for a portion of licensed spectrum may provide licensed shared access (LSA) to share that spectrum with other parties, e.g., with suitable licensee-determined conditions to gain access.

Devices communicating in the radio access network 200 may utilize one or more multiplexing techniques and multiple access algorithms to enable simultaneous communication of the various devices. For example, 5G NR specifications provide multiple access for UL transmissions from UEs 222 and 224 to base station 210, and for multiplexing for DL transmissions from base station 210 to one or more UEs 222 and 224, utilizing orthogonal frequency division multiplexing (OFDM) with a cyclic prefix (CP). In addition, for UL transmissions, 5G NR specifications provide support for discrete Fourier transform-spread-OFDM (DFT-s-OFDM) with a CP (also referred to as single-carrier FDMA (SC-FDMA)). However, within the scope of the present disclosure, multiplexing and multiple access are not limited to the above schemes, and may be provided utilizing time division multiple access (TDMA), code division multiple access (CDMA), frequency division multiple access (FDMA), sparse code multiple access (SCMA), resource spread multiple access (RSMA), or other suitable multiple access schemes. Further, multiplexing DL transmissions from the base station 210 to UEs 222 and 224 may be provided utilizing time division multiplexing (TDM), code division multiplexing (CDM), frequency division multiplexing (FDM), orthogonal frequency division multiplexing (OFDM), sparse code multiplexing (SCM), or other suitable multiplexing schemes.

Devices in the radio access network 200 may also utilize one or more duplexing algorithms. Duplex refers to a point-to-point communication link where both endpoints can communicate with one another in both directions. Full-duplex means both endpoints can simultaneously communicate with one another. Half-duplex means only one endpoint can send information to the other at a time. Half-duplex emulation is frequently implemented for wireless links utilizing time division duplex (TDD). In TDD, transmissions in different directions on a given channel are separated from one another using time division multiplexing. That is, in some scenarios, a channel is dedicated for transmissions in one direction, while at other times the channel is dedicated for transmissions in the other direction, where the direction may change very rapidly, e.g., several times per slot. In a wireless link, a full-duplex channel generally relies on physical isolation of a transmitter and receiver, and suitable interference cancellation technologies. Full-duplex emulation is frequently implemented for wireless links by utilizing frequency division duplex (FDD) or spatial division duplex (SDD). In FDD, transmissions in different directions may operate at different carrier frequencies (e.g., within paired spectrum). In SDD, transmissions in different directions on a given channel are separated from one another using spatial division multiplexing (SDM). In other examples, full-duplex communication may be implemented within unpaired spectrum (e.g., within a single carrier bandwidth), where transmissions in different directions occur within different sub-bands of the carrier bandwidth. This type of full-duplex communication may be referred to herein as sub-band full duplex (SBFD), also known as flexible duplex.

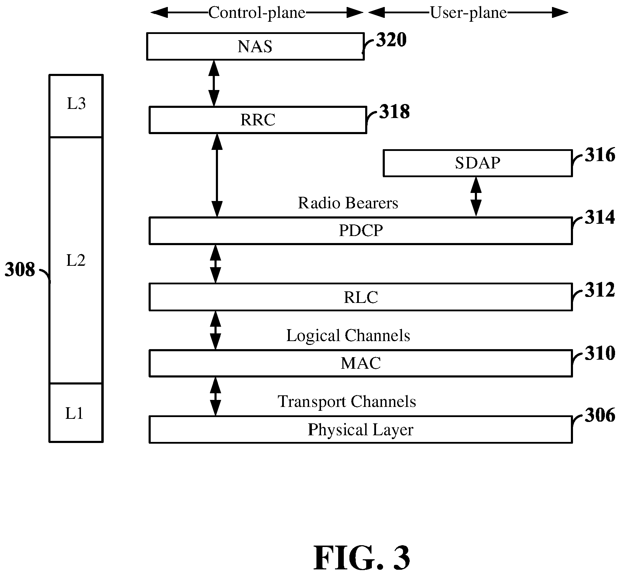

The radio protocol architecture for a RAN, such as the RAN 200 shown in FIG. 2, may take on various forms depending on the particular application. An example of a radio protocol architecture for the user and control planes is illustrated FIG. 3.

As illustrated in FIG. 3, the radio protocol architecture for the UE and the base station includes three layers: layer 1 (L1), layer 2 (L2), and layer 3 (L3). L1 is the lowest layer and implements various physical layer signal processing functions. L1 will be referred to herein as the physical layer 306. L2 308 is above the physical layer 306 and is responsible for the link between the UE and base station over the physical layer 306.

In the user plane, the L2 layer 308 includes a media access control (MAC) layer 310, a radio link control (RLC) layer 312, a packet data convergence protocol (PDCP) 314 layer, and a service data adaptation protocol (SDAP) layer 316, which are terminated at the base station on the network side. Although not shown, the UE may have several upper layers above the L2 layer 308 including at least one network layer (e.g., IP layer and user data protocol (UDP) layer) that is terminated at the User Plane Function (UPF) on the network side and one or more application layers.

The SDAP layer 316 provides a mapping between a 5G core (5GC) quality of service (QoS) flow and a data radio bearer and performs QoS flow ID marking in both downlink and uplink packets. The PDCP layer 314 provides packet sequence numbering, in-order delivery of packets, retransmission of PDCP protocol data units (PDUs), and transfer of upper layer data packets to lower layers. PDU's may include, for example, Internet Protocol (IP) packets, Ethernet frames and other unstructured data (i.e., Machine-Type Communication (MTC), hereinafter collectively referred to as "packets"). The PDCP layer 314 also provides header compression for upper layer data packets to reduce radio transmission overhead, security by ciphering the data packets, and integrity protection of data packets. The RLC layer 312 provides segmentation and reassembly of upper layer data packets, error correction through automatic repeat request (ARQ), and sequence numbering independent of the PDCP sequence numbering. The MAC layer 310 provides multiplexing between logical and transport channels. The MAC layer 310 is also responsible for allocating the various radio resources (e.g., resource blocks) in one cell among the UEs and for HARQ operations. The physical layer 306 is responsible for transmitting and receiving data on physical channels (e.g., within slots).

In the control plane, the radio protocol architecture for the UE and base station is substantially the same for L1 306 and L2 308 with the exception that there is no SDAP layer in the control plane and there is no header compression function for the control plane. The control plane also includes a radio resource control (RRC) layer 318 in L3 and a higher Non Access Stratum (NAS) layer 320. The RRC layer 318 is responsible for establishing and configuring signaling radio bearers (SRBs) and data radio bearers (DRBs) between the base station the UE, paging initiated by the 5GC or NG-RAN, and broadcast of system information related to Access Stratum (AS) and Non Access Stratum (NAS). The RRC layer 318 is further responsible for QoS management, mobility management (e.g., handover, cell selection, inter-RAT mobility), UE measurement and reporting, and security functions. The NAS layer 320 is terminated at the AMF in the core network and performs various functions, such as authentication, registration management, and connection management.

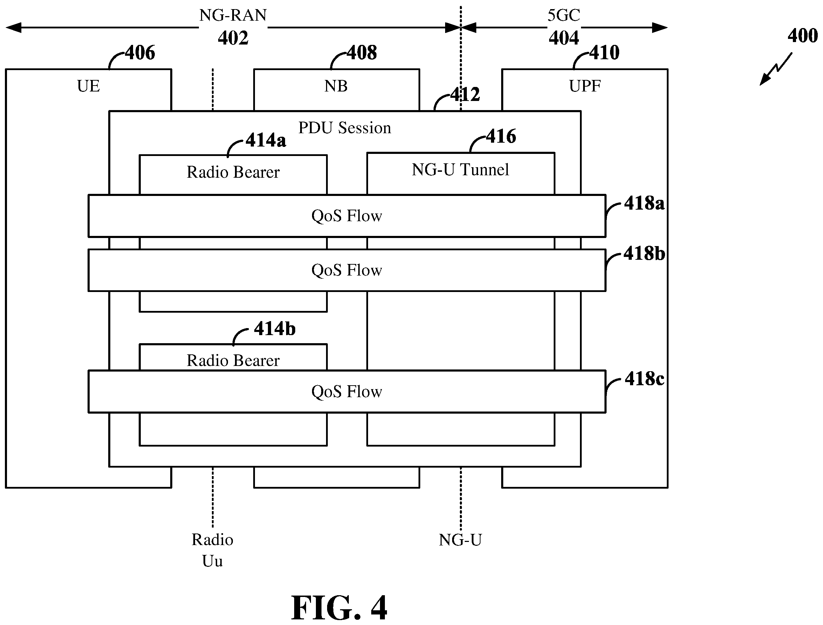

Referring to FIG. 4, a diagram illustrating an exemplary QoS architecture 400 that facilitates aspects disclosed herein is provided. In some examples, the QoS architecture 400 is implemented within a next generation RAN (e.g., NG-RAN) 402, both for New Radio (NR) connected to a 5G core network (5GC) 404 and for E-UTRA connected to the 5GC. The NG-RAN 402 includes a user equipment (UE) 406 and a Node B (e.g., a next generation (ng)-eNB or gNB) 408, while the 5GC includes a user plane function (UPF) 410. The 5GC 404 may further include other core network nodes (not shown), such as a core access and mobility management function (AMF), a session management function (SMF), and a policy control function (PCF).

For each UE (e.g., UE 406), the 5GC 404 establishes one or more PDU Sessions 412. Each PDU session 412 may include one or more data flows 418a-418c (e.g., IP, Ethernet and/or unstructured data flows), each associated with a set of one or more applications. The 5GC 404 may further select a QoS to be associated with each of the data flows 418a-418c within the PDU session 412. At the NAS level, the QoS flow is the finest granularity of QoS differentiation in a PDU session and is characterized by both a QoS profile provided by the 5GC 404 to the NB 408 and QoS rule(s) provided by the 5GC 404 to the UE 406. The QoS profile is used by the NB 408 to determine the treatment on the radio interface, while the QoS rules dictate the mapping between uplink User Plane traffic and QoS flows 418a-418c to the UE 406.

The QoS profile may include one or more QoS parameters. For example, the QoS profile may include an allocation and retention priority (ARP), which may indicate the priority level for the allocation and retention of data radio bearers, and a 5G QoS Identifier (5QI), which is associated with particular 5G QoS characteristics. Examples of 5G QoS characteristics may include a resource type (e.g., Guaranteed Bit Rate (GBR), delay critical GBR, or non-GBR), a priority level, a packet delay budget, a packet error rate, an averaging window, and a minimum data burst volume. For GBR QoS flows, the QoS profile may further specify a guaranteed flow bit rate (GFBR) for both uplink and downlink, a maximum flow bit rate (MFBR) for both uplink and downlink, and a maximum packet loss rate for both uplink and downlink. For non-GBR QoS flows, the QoS profile may include a reflective QoS attribute (RQA). The RQA, when included, indicates that some (not necessarily all) traffic carried on this QoS flow is subject to reflective QoS (RQoS) at the NAS layer. Standardized or pre-configured 5G QoS characteristics are derived from the 5QI value and are not explicitly signaled. Signaled QoS characteristics are included as part of the QoS profile.

In addition, an Aggregate Maximum Bit Rate is associated with each PDU session 412 (Session-AMBR) and with each UE 406 (UE-AMBR). The Session-AMBR limits the aggregate bit rate that can be expected to be provided across all Non-GBR QoS Flows for a specific PDU Session 412. The UE-AMBR limits the aggregate bit rate that can be expected to be provided across all Non-GBR QoS Flows of a UE.

The NB 408 establishes one or more Data Radio Bearers (DRB) 414a and 414b per PDU Session 412. The NB 408 further maps packets belonging to different PDU sessions 412 to different DRBs. Here, the NB 408 establishes at least one default DRB (e.g., DRB 414a) for each PDU Session 412. At the Access Stratum (AS) level, the DRB defines the packet treatment on the radio interface (Uu). A DRB serves packets with the same packet forwarding treatment. Separate DRBs may be established for QoS flows requiring different packet forwarding treatment, or several QoS flows belonging to the same PDU session can be multiplexed in the same DRB. Within each PDU session 412, the NB 408 determines how to map multiple QoS flows to a DRB. For example, the NB 408 may map a GBR flow and a non-GBR flow, or more than one GBR flow to the same DRB. The timing of establishment of non-default DRB(s) (e.g., DRB 414b) between the NB 408 and UE 406 for QoS flow(s) configured during establishing a PDU session can be different from the time when the PDU session is established.

The NG-RAN 402 and 5GC 404 ensure quality of service (e.g., reliability and target delay) by mapping packets to appropriate QoS Flows 418a-418c and DRBs 414a and 414b. The NAS layer performs packet filtering in both the UE 406 and in the 5GC 404 to associate uplink (UL) and downlink (DL) packets with QoS Flows 418a-419c. The AS layer, which is a functional layer between the UE 406 and the NB 408, implements mapping rules in the UE 406 and in the NB 408 to associate UL and DL QoS flows 418a-418c with DRBs 414a and 414b. Hence, there is a two-step mapping of IP flows to QoS flows (in the NAS) and from QoS flows to DRBs (in the AS). In the example shown in FIG. 4, QoS flows 418a and 418b are mapped to DRB 414a, while QoS flow 418c is mapped to DRB 414b.

Each QoS flow 418a-418c is identified within the PDU session 412 by a QoS Flow ID (QFI) carried in an encapsulation header over a next generation tunnel (NG-U tunnel) 416 provided on an interface between the NB 408 and the UPF 410 (NG-U). The QoS flow to DRB mapping by NB 408 is based on the QFI and the associated QoS profiles (i.e., QoS parameters and QoS characteristics). For example, in the uplink, the NB 408 may control the mapping of QoS Flows 418a-418c to DRBs 414a and 414b using reflective mapping or explicit configuration. In reflective mapping, for each DRB 414a and 414b, the UE 406 monitors the QFI(s) of the downlink packets and applies the same mapping in the uplink. That is, for a DRB (e.g., DRB 414a), the UE 406 maps the uplink packets belonging to the QoS flows(s) 418a and 418b corresponding to the QFI(s) and PDU Session 412 observed in the downlink packets for that DRB 414a. To enable this reflective mapping, the NB 408 marks downlink packets over the radio interface (Uu) with the QFI. In an explicit configuration, the NB 408 may configure by RRC an uplink QoS Flow to DRB mapping. The UE 406 may apply the latest update of the mapping rules regardless of whether the update is performed via reflecting mapping or explicit configuration.

In the downlink, the QFI is signaled by the NB 408 over the radio interface (Uu) for the purpose of RQoS, and if neither the NB 408, nor the NAS (as indicated by the RQA), intend to use reflective mapping for the QoS flow(s) carried in a DRB, no QFI is signaled for that DRB over Uu. However, the NB 408 can configure the UE 406 to still signal the QFI over Uu. As indicated above, for each PDU session 412, a default DRB (e.g., DRB 414a) is configured. If an incoming UL packet matches neither an RRC configured nor a reflective configured QoS Flow ID to DRB mapping. the UE 406 may map the UL packet to the default DRB 414a of the PDU session 412.

Upon establishment of the PDU session, the UE may be configured (e.g., using a control message from the NB) to map a first QoS flow to a first DRB (e.g., 414a). The UE may further be configured to map a second QoS flow to a second DRB (414b). The NAS layer may then perform packet filtering to associate UL packets with QoS Flows. For example, a NAS layer may associate packets from a service data flow (SDF) to the first QoS flow, and packets from other SDFs to respective other QoS flows.

As discussed herein, a wireless network (e.g., 5G NR) may be configured to implement packet re-reordering functionality at the PDCP layer, mitigating packet transmission issues, but potentially introducing undesirable delays in transmitting downlink packets to an access point. During wireless communications, packets can be received at a node, such as at user equipment (UE), out of order relative to an intended order of the packets ("out-of-order delivery", or OOOD). Accordingly, a packet reordering function may be performed in the PDCP layer. Because packet reordering is implemented at this layer, a Radio Link Control (RLC) downlink (DL) service data unit (SDU) may be delivered to the PDCP layer, even when there is a gap in the received packets. Additionally, to allow the network stack of a network access point (AP) to receive retransmitted packets, a PDCP reordering timer may be used, wherein, upon expiration of the timer, DL packets are delivered to the AP even if there are missing packets before the delivered packets in the intended packet order.

These mechanisms mitigate, to some extent, DL packet transmission issues resulting from packet drop in the wireless link to the access point. However, the PDCP reordering timer is configured for each network cell and is fixed relative to variable factors, such as the distance between the UE and the corresponding base station, as well as the traffic congestion status of the base station. Thus, even when a packet is successfully received at the baseband processor, the PDCP reordering timer can introduce an undesirable delay for transmitting downlink packets to the AP.

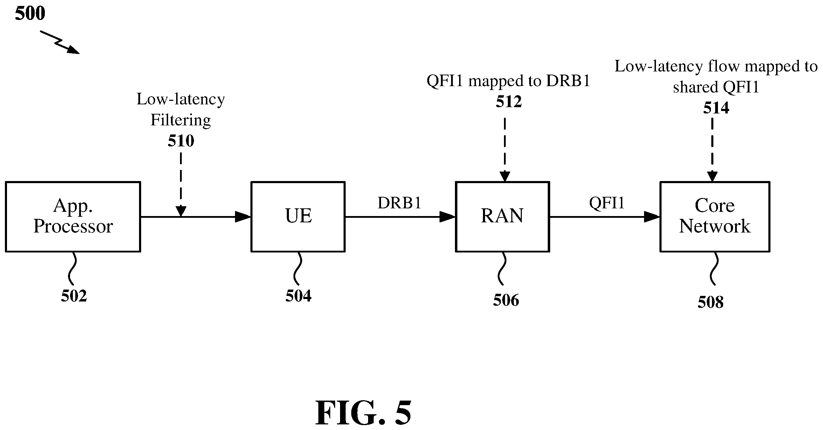

In low-latency applications (e.g., cloud gaming, extended reality (XR, AR, VR), etc.), low-latency flows in the network may be configured differently. FIG. 5 illustrates a simplified block diagram of a wireless system 500 for mapping low-latency flows in accordance with some aspects of the present disclosure. The figure illustrates an application processor 502 (e.g., 804) that may be configured with an application client for a UE 504 that communicates via modem with a RAN 506 and a core network 508, discussed in greater detail above in connection with FIG. 1. In a low-latency application, traffic flow template (TFT) filtering may be performed in 510. A traffic flow template information element may be used to specify the TFT parameters and operations for a packet data protocol (PDP) context. In addition, this information element may be used to transfer extra parameters to the network (e.g. an Authorization Token). The TFT may contain packet filters for the downlink direction, the uplink direction or packet filters that apply for both directions. The packet filters determine the traffic mapping to PDP contexts. The downlink packet filters may be applied by the network and the uplink packet filters may be applied by the UE. A packet filter that applies for both directions may be applied by the network as a downlink packet filter and by the UE as an uplink filter.

Payload data may be transmitted between the core network 508 User Plane Function (UPF) to a gNB Distributed Unit (gNB-DU) and vice versa. For the transport over the RAN 506 fronthaul (realized e.g., as enhanced Common Public Radio Interface (eCPRI)) and across the radio interface, a dedicated radio bearer (DRB) for the user plane transport may be configured by the RAN 506 gNB Central Unit for the Control Plane (gNB-CU CP). An RRC protocol may be utilized to establish this DRB. Using virtualization, the different protocol layers for the air interface may be distributed and the gNB-DU may control the lower layer PHY/RLC/MAC parameters (e.g the c-RNTI), while the gNB-CU CP assigns higher layer parameters of PDCP and RRC like the DRB-ID. Since the gNB-CU CP may send downlink RRC messages to the UE, the lower layer parameters from the DU may first be sent in an uplink direction to the gNB-CU CP. In the example of FIG. 5, low-latency flows may be mapped to one QFI flow 512 and one DRB, with the QFI flow and DRB shared with other traffic, as shown in block 514.

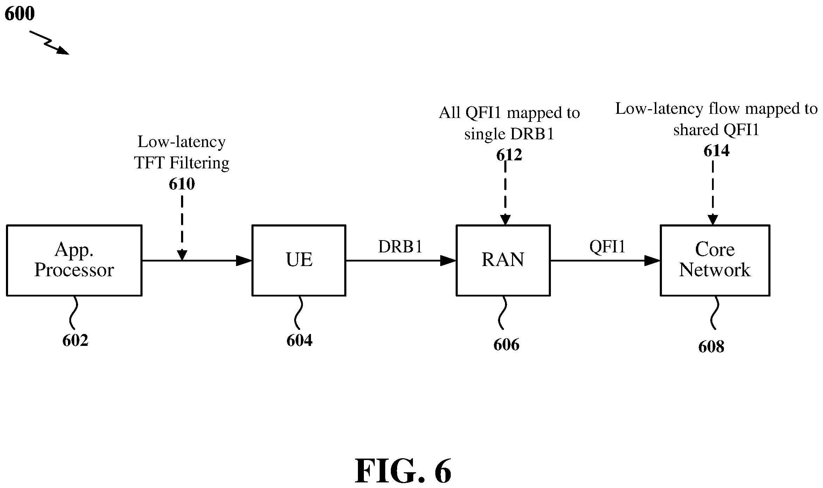

FIG. 6 illustrates another simplified block diagram of a wireless system 600 for mapping low-latency flows in accordance with some aspects of the present disclosure. The wireless system 600 is similar to wireless system 500, discussed above in connection with FIG. 5, and includes an application processor 602, UE 604, RAN 606 and core network 608. In this example, low-latency TFT filtering is performed in 610, and all low-latency flows are mapped to one or more distinct QFI flows 614, but, unlike the example in FIG. 5, the QFI flows in 612 are mapped to a single DRB, with the DRB being shared with other traffic.

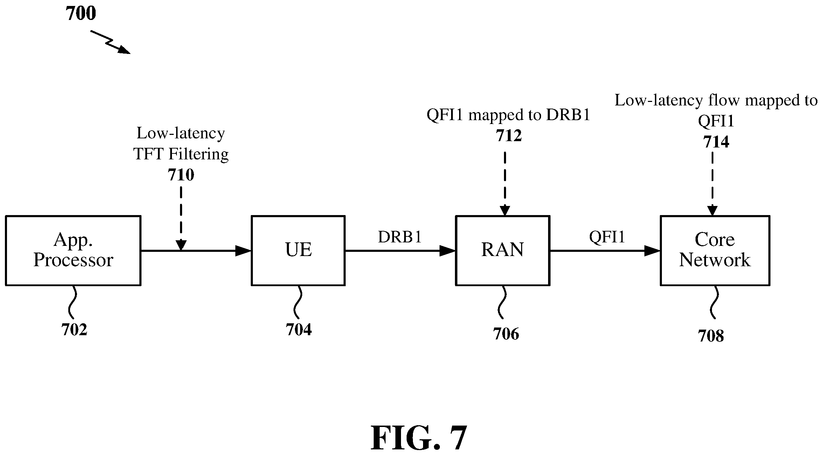

FIG. 7 illustrates another simplified block diagram of a wireless system 700 for mapping low-latency flows in accordance with some aspects of the present disclosure. The wireless system 700 is also similar to wireless system 500, discussed above in connection with FIG. 5, and includes an application processor 702, UE 704, RAN 706 and core network 708. In this example, low-latency TFT filtering is performed in 710, and low-latency flows may be mapped to one QFI flow 714 and one DRB 712, however, the QFI flow and DRB is not shared with other traffic, as was shown in FIG. 5.

Since PDCP-OOOD may result in poor performance for non-latency traffic (e.g., TCP), performance mitigation may be achieved by subjecting only the low-latency traffic to PDCP-OOOD. Under some examples, PDCP-OOOD may be activated/deactivated for downlink traffic between the UE PDCP and the application layer, irrespective of how low-latency traffic is mapped. An application client may be configured for a UE (e.g., 502, 602, 702) to determine if the PDCP layer can deliver packets out of order, without direct control from the RAN (e.g., 506, 606, 706).

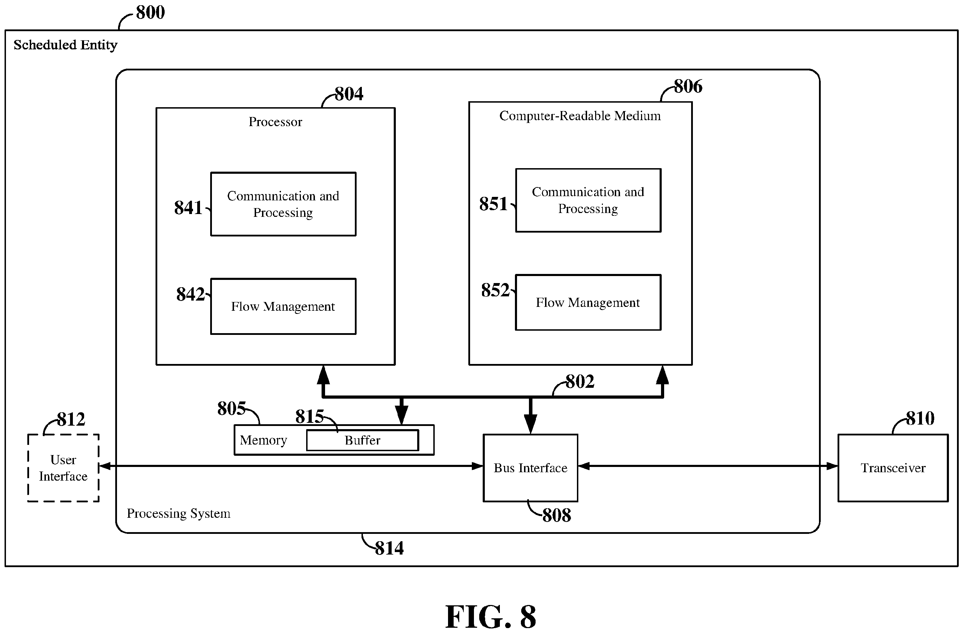

FIG. 8 is a block diagram illustrating an example of a hardware implementation for a scheduled entity 800 employing a processing system 814. For example, the scheduled entity 800 may be a user equipment (UE) as illustrated in any one or more of the FIGs. 1, 2 and/or 4 disclosed herein.

The scheduled entity 800 may be implemented with a processing system 814 (or "processing apparatus") that includes one or more processors 804. Examples of processors 804 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. In various examples, the scheduled entity 800 may be configured to perform any one or more of the functions described herein. That is, the processor 804, as utilized in a scheduled entity 800, may be used to implement any one or more of the processes and processes described below. The processor 804 may in some instances be implemented via a baseband or modem chip and in other implementations, the processor 804 may itself comprise a number of devices distinct and different from a baseband or modem chip (e.g., in such scenarios is may work in concert to achieve examples discussed herein). And as mentioned above, various hardware arrangements and components outside of a baseband modem processor can be used in implementations, including RF-chains, power amplifiers, modulators, buffers, interleavers, adders/summers, etc.

In this example, the processing system 814 may be implemented with a bus architecture, represented generally by the bus 802. The bus 802 may include any number of interconnecting buses and bridges depending on the specific application of the processing system 814 and the overall design constraints. The bus 802 communicatively couples together various circuits including one or more processors (represented generally by the processor 804), a memory 805, and computer-readable media (represented generally by the computer-readable medium 806). The bus 802 may also link various other circuits such as timing sources, peripherals, voltage regulators, and power management circuits, which are well known in the art, and therefore, will not be described any further. A bus interface 808 provides an interface between the bus 802 and a transceiver 810. The transceiver 810 provides a communication interface or means for communicating with various other apparatus over a transmission medium. Depending upon the nature of the apparatus, a user interface 812 (e.g., keypad, display, speaker, microphone, joystick) may also optionally be provided.

The processor 804 is responsible for managing the bus 802 and general processing, including the execution of software stored on the computer-readable medium 806. The software, when executed by the processor 804, causes the processing system 814 to perform the various functions described below for any particular apparatus. The computer-readable medium 806 and the memory 805 may also be used for storing data that is manipulated by the processor 804 when executing software.

One or more processors 804 in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium 806.

The computer-readable medium 806 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium 806 may reside in the processing system 814, external to the processing system 814, or distributed across multiple entities including the processing system 814. The computer-readable medium 806 may be embodied in a computer program product. In some examples, the computer-readable medium 806 may be part of the memory 805. By way of example, a computer program product may include a computer-readable medium in packaging materials. Those skilled in the art will recognize how best to implement the described functionality presented throughout this disclosure depending on the particular application and the overall design constraints imposed on the overall system.

In some aspects of the disclosure, processor 804 may include circuitry configured for various functions. For example, the processor 804 may include communication and processing circuitry 841, configured to communicate with a base station (e.g., gNB or eNB) via a Uu link. In some examples, the communication and processing circuitry 841 may include one or more hardware components that provide the physical structure that performs processes related to wireless communication (e.g., signal reception and/or signal transmission) and signal processing (e.g., processing a received signal and/or processing a signal for transmission). For example, the communication and processing circuitry 841 may include one or more transmit/receive chains.

In some implementations where the communication involves receiving information, the communication and processing circuitry 841 may obtain information from a component of the wireless communication device 800 (e.g., from the transceiver 810 that receives the information via radio frequency signaling or some other type of signaling suitable for the applicable communication medium), process (e.g., decode) the information, and output the processed information. For example, the communication and processing circuitry 841 may output the information to another component of the processor 804, to the memory 805, or to the bus interface 808. In some examples, the communication and processing circuitry 841 may receive one or more of signals, messages, other information, or any combination thereof. In some examples, the communication and processing circuitry 841 may receive information via one or more channels. In some examples, the communication and processing circuitry 841 may include functionality for a means for receiving. In some examples, the communication and processing circuitry 841 may include functionality for a means for processing, including a means for demodulating, a means for decoding, etc.

In some implementations where the communication involves sending (e.g., transmitting) information, the communication and processing circuitry 841 may obtain information (e.g., from another component of the processor 804, the memory 805, or the bus interface 808), process (e.g., modulate, encode, etc.) the information, and output the processed information. For example, the communication and processing circuitry 841 may output the information to the transceiver 810 (e.g., that transmits the information via radio frequency signaling or some other type of signaling suitable for the applicable communication medium). In some examples, the communication and processing circuitry 841 may send one or more of signals, messages, other information, or any combination thereof. In some examples, the communication and processing circuitry 841 may send information via one or more channels. In some examples, the communication and processing circuitry 841 may include functionality for a means for sending (e.g., a means for transmitting). In some examples, the communication and processing circuitry 841 may include functionality for a means for generating, including a means for modulating, a means for encoding, etc.

In some examples, the communication and processing circuitry 841 may be configured to communicate (e.g., transmit/receive) beamformed signals at a mmWave frequency or a sub-6 GHz frequency via the transceiver 810 and an antenna array (not shown). The communication and processing circuitry 841 may further be configured to execute communication and processing instructions (software) 851 stored in the computer-readable medium 806 to implement one or more of the functions described herein.

In some aspects of the disclosure, the processor 804 may also include additional circuitry configured for various functions. For example, the processor 804 may include flow management circuitry 842, that may operate independently or together with communication and processing circuitry 841 to establish one or more PDU Sessions including one or more data flows associated with a set of one or more applications according to QoS profiles and rules. As discussed above, a QoS profile may include one or more QoS parameters specifying QoS characteristics. Flow management circuitry 842 may also be configured with an application client to process and map low-latency flows and perform TFT filtering and packet filtering as described above. A traffic flow template information element may be used by flow management circuitry 842 to specify TFT parameters and operations for a PDP context, and information elements may be used to transfer extra parameters to the network. The flow management circuitry 842 may further be configured to execute flow management (software) 852 stored in the computer-readable medium 806 to implement one or more of the functions described herein.

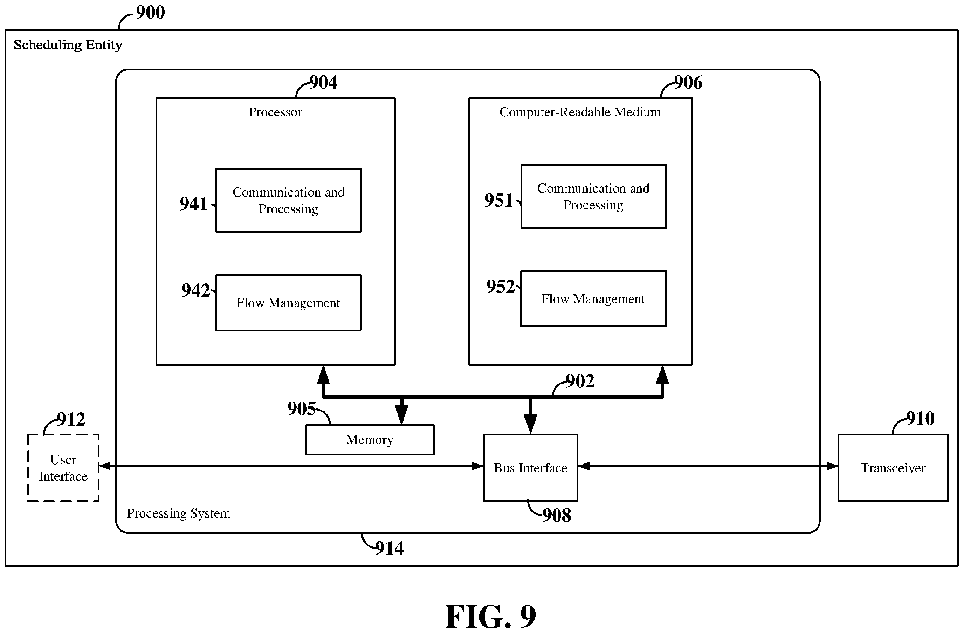

FIG. 9 is a conceptual diagram illustrating an example of a hardware implementation for an exemplary scheduling entity 900 employing a processing system 914. In accordance with various aspects of the disclosure, an element, or any portion of an element, or any combination of elements may be implemented with a processing system 914 that includes one or more processors 904. For example, the scheduling entity 900 may be a base station as illustrated in any one or more of FIGs. 1, 2 and/or 4-7.

The processing system 914 may be substantially the same as the processing system 914 illustrated in FIG. 9, including a bus interface 908, a bus 902, memory 905, a processor 904, and a computer-readable medium 906. Furthermore, the scheduling entity 900 may include an optional user interface 912 and a transceiver 910 substantially similar to those described above in FIG. 8. That is, the processor 904, as utilized in a scheduling entity 900, may be used to implement any one or more of the processes described herein.

In some aspects, the processor 904 may include communication and processing circuitry 941, which may be configured similarly to circuitry 841 described above in connection with FIG. 8. The communication and processing circuitry 941 may further be configured to execute communication and processing instructions (software) 951 stored in the computer-readable medium 906 to implement one or more of the functions described herein.

In some aspects of the disclosure, the processor 904 may also include additional circuitry configured for various functions. For example, the processor 904 may include flow management circuitry 942, that may operate independently or together with communication and processing circuitry 941 to establish one or more PDU Sessions including one or more data flows according to QoS profiles and rules. As discussed above, a QoS profile may include one or more QoS parameters specifying QoS characteristics. Flow management circuitry 942 may also process traffic mapping an packet filtering, and may further communicate payload data to a scheduled entity, another scheduled entity, and/or core network. Low-latency flows may also be mapped to QFI flows and DRBs. The flow management circuitry 942 may further be configured to execute flow management (software) 952 stored in the computer-readable medium 906 to implement one or more of the functions described herein.

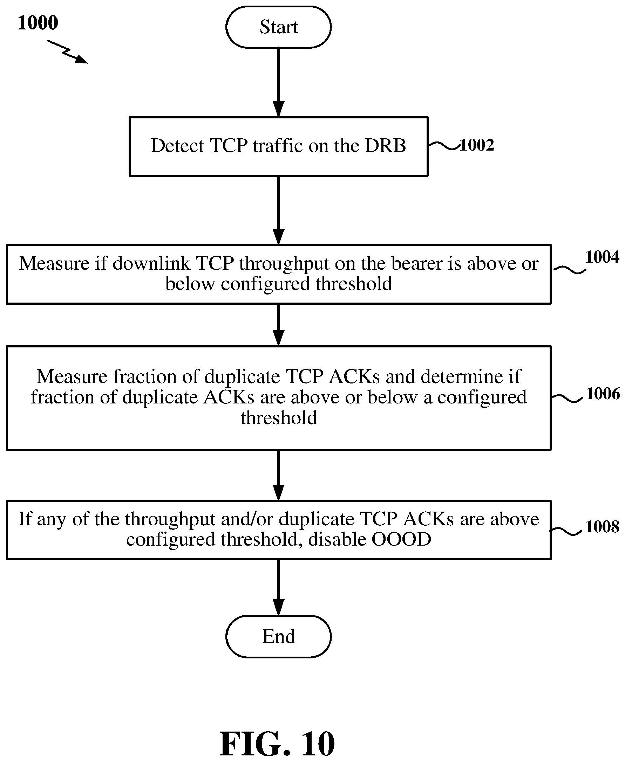

FIG. 10 illustrates a method 1000 for activating PDCP-OOOD for a UE according to some aspects of the invention. In block 1002, the UE may execute an API, that operates to categorize and/or designate one or more IP flows as one or more sets of PDCP-OOOD flows. For example, communication and processing circuitry 841 and flow management circuitry 842, shown and described above in connection with FIG. 8, may provide a means to set one or more configuration parameters from the wireless network and categorize and/or designate one or more IP flows as one or more sets of PDCP-OOOD flows.

In block 1004, the API determines IP flows associated with either a default radio bearer or an application-provided dedicated radio bearer. For example, communication and processing circuitry 841 and flow management circuitry 842, shown and described above in connection with FIG. 8, may provide a means to determine IP flows associated with either a default radio bearer or an application-provided dedicated radio bearer.

In block 1006, the API may, alternately or in addition, determine IP flows associated with application-provided TFTs. For example, communication and processing circuitry 841 and flow management circuitry 842, shown and described above in connection with FIG. 8, may provide a means to determine IP flows associated with application-provided TFTs.

In block 1008, the API may, alternately or in addition, determine IP flows associated with application provided QFIs on either a default RB or a dedicated RB. For example, communication and processing circuitry 841 and flow management circuitry 842, shown and described above in connection with FIG. 8, may provide a means to determine IP flows associated with application provided QFIs on either a default RB or a dedicated RB.

In block 1010, the API may then determine one or more configuration parameters for each set of PDCP-OOOD flow indicating if a network RRC-configured flag for PDCP-OOOD enablement is used, or if the UE-side PDCP-OOOD configuration is used. Under these configurations, the UE API may use a configuration parameter for any or all of the PDCP-OOOD flows to selectively configure PDCP-OOOD for activation based on API determinations. For example, communication and processing circuitry 841 and flow management circuitry 842, shown and described above in connection with FIG. 8, may provide a means to determine one or more configuration parameters for each set of PDCP-OOOD flow indicating if a network RRC-configured flag for PDCP-OOOD enablement is used, or if the UE-side PDCP-OOOD configuration is used.

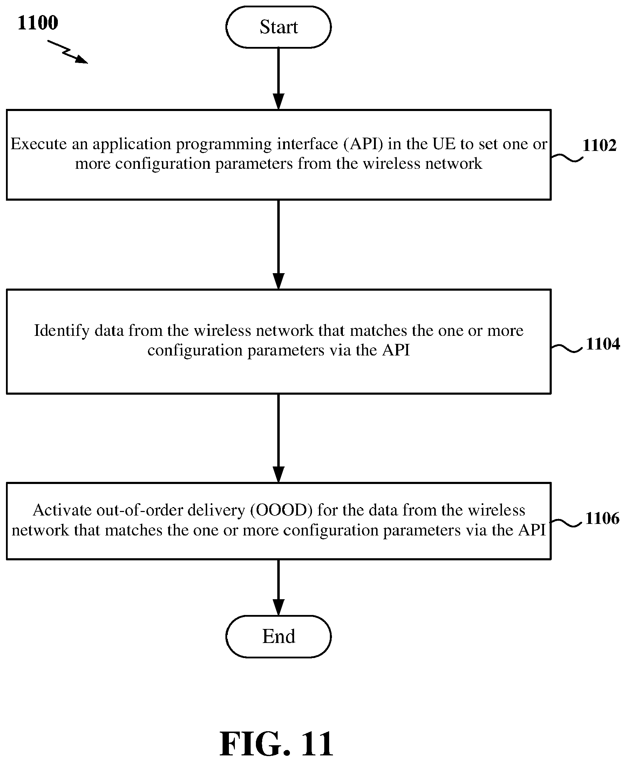

Once PDCP-OOOD is activated, the UE may continue to monitor data via the API to determine if the PDCP-OOOD is affecting transmission performance, and, if so, disable or deactivate PDCP-OOOD. FIG. 11 illustrates a method 1100 for measuring and detecting characteristics of TCP traffic on the DRB for UE-based PDCP-OOOD control in accordance with some aspects of the present disclosure. In block 1102, the API detects TCP traffic on the DRM and measures if the downlink TCP throughput on the DRB is above or below a configured threshold in block 1104. For example, communication and processing circuitry 841 and flow management circuitry 842, shown and described above in connection with FIG. 8, may provide a means to detect TCP traffic on the DRM and measures if the downlink TCP throughput on the DRB is above or below a configured threshold.

Alternately or in addition, the API may measure a number (fraction) of duplicate TCP data acknowledgements (ACKs) in block 1106 and determine if the number of duplicate ACKs are above or below a configured threshold. If any or either of the TCP throughput and/or duplicate TCP ACKs are above their respective configured threshold(s), the UE API disables PDCP-OOOD in block 1108. Accordingly, in cases where TCP is present on the bearer mapped for out of order delivery, the UE modem and API will make use of throughput and of duplicate TCP ACKs measurements to decide whether to enable out-of-order delivery or not. Such a configuration may mitigate or avoid deteriorating TCP performance by delivering data out of sequence. For example, communication and processing circuitry 841 and flow management circuitry 842, shown and described above in connection with FIG. 8, may provide a means to measure duplicate TCP data ACKs and determine if the number of duplicates are above or below a configured threshold, as well as disabling PDCP-OOOD if any or either of the TCP throughput and/or duplicate TCP ACKs are above their respective configured threshold(s).

FIG. 11 illustrates a method 1100 for a UE to communicate with a wireless network according to some aspects of the present disclosure. In block 1102, the UE may execute an API to set one or more configuration parameters from the wireless network. For example, communication and processing circuitry 841 and flow management circuitry 842, shown and described above in connection with FIG. 8, may provide a means to execute an API to set one or more configuration parameters from the wireless network.

In block 1104, the UE may identify data from the wireless network that matches the one or more configuration parameters via the API. In some examples, the identifying of data from the wireless network may include identifying one or more Internet Protocol (IP) flows from the wireless network that match the one or more configuration parameters. The identifying of the one or more IP flows may include measuring the one or more IP flows from a default resource bearer provided by the wireless network. In some examples, the identifying of the one or more IP flows may include identifying all of the one or more IP flows sharing an API-provided resource bearer. In some examples, the identifying of the one or more IP flows may include measuring the one or more IP flows associated with one or more API-provided traffic flow templates (TFTs). In some examples, identifying the one or more IP flows may include measuring the one or more IP flows associated with one or more API-provided quality-of service flow indicator (QFI) on one of a default resource bearer provided by the wireless network, or an API-provided resource bearer. For example, communication and processing circuitry 841 and flow management circuitry 842, shown and described above in connection with FIG. 8, may provide a means to identify data from the wireless network that matches the one or more configuration parameters via the API.

In block 1106, the UE may activate out-of-order delivery (OOOD) for the data from the wireless network that matches the one or more configuration parameters via the API. In some examples, the activating of out-of-order delivery for the data may include activating a Packet Data Convergence Protocol (PDCP) OOOD. In some examples, activating out-of-order delivery for the data may include using a first flag indicating OOOD activation following a wireless network configuration, and/or using a second flag indicating OOOD activation following configuration provided by the API. In some examples, the OOOD may be deactivated in response to a downlink transport control protocol (TCP) throughput on a bearer meeting or exceeding a configured threshold, and/or in response to a number of duplicate downlink transport control protocol (TCP) acknowledgements (ACKs) meeting or exceeding a configured threshold. For example, communication and processing circuitry 841 and flow management circuitry 842, shown and described above in connection with FIG. 8, may provide a means to activate and/or deactivate OOOD for the data from the wireless network that matches the one or more configuration parameters via the API.

Of course, in the above examples, the circuitry included in the processor 804 is merely provided as an example, and other means for carrying out the described functions may be included within various aspects of the present disclosure, including but not limited to the instructions stored in the computer-readable storage medium 806, or any other suitable apparatus or means described in any one of the FIGs. 1, 2, 4-7, and/or 9, and utilizing, for example, the processes and/or algorithms described herein in relation to FIGs. 10-11.

The processes shown in FIGs. 10 and 11 may include additional aspects, such as any single aspect or any combination of aspects described below and/or in connection with one or more other processes described elsewhere herein.

Aspect 1: A method for a user equipment (UE) to communicate with a wireless network, comprising: executing an application programming interface (API) in the UE to set one or more configuration parameters from the wireless network; identifying data from the wireless network that matches the one or more configuration parameters via the API; and activating out-of-order delivery (OOOD) for the data from the wireless network that matches the one or more configuration parameters via the API.

Aspect 2: The method of aspect 1, wherein the identifying of data from the wireless network comprises identifying one or more Internet Protocol (IP) flows from the wireless network that match the one or more configuration parameters.

Aspect 3: The method of aspect 1 and/or 2, wherein the identifying the one or more IP flows comprises measuring the one or more IP flows from a default resource bearer provided by the wireless network.

Aspect 4: The method of any of aspects 1, 2 and/or 3, wherein the identifying the one or more IP flows comprises identifying all of the one or more IP flows sharing an API-provided resource bearer.

Aspect 5: The method of any of aspects 1-3 and/or 4, wherein the identifying the one or more IP flows comprises measuring the one or more IP flows associated with one or more API-provided traffic flow templates (TFTs).

Aspect 6: The method of any of aspects 1-4 and/or 5, wherein the identifying the one or more IP flows comprises measuring the one or more IP flows associated with one or more API-provided quality-of service flow indicator (QFI) on one of a default resource bearer provided by the wireless network, or an API-provided resource bearer.

Aspect 7: The method of any of aspects 1-5 and/or 6, wherein the activating out-of-order delivery for the data comprises activating a Packet Data Convergence Protocol (PDCP) OOOD.

Aspect 8: The method of any of aspects 1-6 and/or 7, wherein the activating out-of-order delivery for the data comprises using a first flag indicating OOOD activation follows a wireless network configuration.

Aspect 9: The method of any of aspects 1-7 and/or 8, wherein the activating out-of-order delivery for the data comprises using a second flag indicating OOOD activation follows configuration provided by the API.

Aspect 10: The method of any of aspects 1-8 and/or 9, further comprising deactivating OOOD in response to a downlink transport control protocol (TCP) throughput on a bearer meeting or exceeding a configured threshold.

Aspect 11: The method of any of aspects 1-9 and/or 10, further comprising deactivating OOOD in response to a number of duplicate downlink transport control protocol (TCP) acknowledgements (ACKs) meeting or exceeding a configured threshold.

Aspect 12: A user equipment (UE) in a wireless network comprising a transceiver, a memory, and a processor coupled to the transceiver and the memory, the processor and the memory configured to perform a method of any one of aspects 1 through 11.

Aspect 13: A user equipment (UE) in a wireless network, comprising: means for executing an application programming interface (API) in the UE to set one or more configuration parameters from the wireless network; means for identifying data from the wireless network that matches the one or more configuration parameters via the API; and means for activating out-of-order delivery (OOOD) for the data from the wireless network that matches the one or more configuration parameters via the API.

Aspect 14: The UE of aspect 13, wherein the means for identifying of data from the wireless network comprises means for identifying one or more Internet Protocol (IP) flows from the wireless network that match the one or more configuration parameters.

Aspect 15: The UE of aspect 13 and/or 14, wherein the means for identifying the IP flows comprises one of means for measuring the one or more IP flows from a default resource bearer provided by the wireless network, me ans identifying all of the one or more IP flows sharing an API-provided resource bearer, or means for measuring the one or more IP flows associated with one or more API-provided traffic flow templates (TFTs).

Aspect 16: The UE of any of aspects 13, 14 and/or 15, wherein the means for identifying the one or more IP flows comprises means for measuring the one or more IP flows associated with one or more API-provided quality-of service flow indicator (QFI) on one of a default resource bearer provided by the wireless network, or an API-provided resource bearer.

Aspect 17: The UE of any of aspects 13-15 and/or 16, wherein the means for activating out-of-order delivery for data comprises a means for activating a Packet Data Convergence Protocol (PDCP) OOOD.

Aspect 18: The UE of any of aspects 13-16 and/or 17, wherein the means for activating out-of-order delivery for data comprises one of: means for using a first flag indicating OOOD activation follows a wireless network configuration, or means for using a second flag indicating OOOD activation follows configuration provided by the API.

Aspect 19: The UE of any of aspects 13-17 and/or 18, further comprising means for deactivating OOOD in response to a downlink transport control protocol (TCP) throughput on a bearer meeting or exceeding a configured threshold.

Aspect 20: A non-transitory computer-readable medium having stored therein instructions executable by one or more processors of a user equipment (UE) in a wireless communication network to perform a method of any one of aspects 1 through 11.

Several aspects of a wireless communication network have been presented with reference to an exemplary implementation. As those skilled in the art will readily appreciate, various aspects described throughout this disclosure may be extended to other telecommunication systems, network architectures and communication standards.

By way of example, various aspects may be implemented within other systems defined by 3GPP, such as Long-Term Evolution (LTE), the Evolved Packet System (EPS), the Universal Mobile Telecommunication System (UMTS), and/or the Global System for Mobile (GSM). Various aspects may also be extended to systems defined by the 3rd Generation Partnership Project 2 (3GPP2), such as CDMA2000 and/or Evolution-Data Optimized (EV-DO). Other examples may be implemented within systems employing IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first object may be coupled to a second object even though the first object is never directly physically in contact with the second object. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components, steps, features and/or functions illustrated in FIGS. 1-15 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGS. 1, 2, and/or 4-9 may be configured to perform one or more of the methods, features, or steps described herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

### STATEMENTS

Statement 1. A method for a user equipment (UE) to communicate with a wireless network, comprising:
executing an application programming interface (API) in the UE to set one or more configuration parameters from the wireless network;
identifying data from the wireless network that matches the one or more configuration parameters via the API; and
activating out-of-order delivery (OOOD) for the data from the wireless network that matches the one or more configuration parameters via the API.

Statement 2. The method of Statement 1, wherein the identifying of data from the wireless network comprises
identifying one or more Internet Protocol (IP) flows from the wireless network that match the one or more configuration parameters.

Statement 3. The method of Statement 2, wherein the identifying the one or more IP flows comprises measuring the one or more IP flows from a default resource bearer provided by the wireless network.

Statement 4. The method of Statement 2, wherein the identifying the one or more IP flows comprises identifying all of the one or more IP flows sharing an API-provided resource bearer.

Statement 5. The method of Statement 2, wherein the identifying the one or more IP flows comprises measuring the one or more IP flows associated with one or more API-provided traffic flow templates (TFTs).

Statement 6. The method of Statement 2, wherein the identifying the one or more IP flows comprises measuring the one or more IP flows associated with one or more API-provided quality-of service flow indicator (QFI) on one of a default resource bearer provided by the wireless network, or an API-provided resource bearer.

Statement 7. The method of Statement 1, wherein the activating out-of-order delivery for the data comprises activating a Packet Data Convergence Protocol (PDCP) OOOD. Statement 8. The method of Statement 1, wherein the activating out-of-order delivery for the data comprises using a first flag indicating OOOD activation follows a wireless network configuration.

Statement 9. The method of Statement 1, wherein the activating out-of-order delivery for the data comprises using a second flag indicating OOOD activation follows configuration provided by the API.

Statement 10. The method of Statement 1, further comprising deactivating OOOD in response to a downlink transport control protocol (TCP) throughput on a bearer meeting or exceeding a configured threshold.

Statement 11. The method of Statement 1, further comprising deactivating OOOD in response to a number of duplicate downlink transport control protocol (TCP) acknowledgements (ACKs) meeting or exceeding a configured threshold.

Statement 12. A user equipment (UE) in a wireless communication network, comprising:
a wireless transceiver;
a memory; and
a processor communicatively coupled to the wireless transceiver and the memory, wherein the processor and the memory are configured to
   execute an application programming interface (API) in the UE to set one or more configuration parameters from the wireless network;
   identify data from the wireless network that matches the one or more configuration parameters via the API; and
   activate out-of-order delivery (OOOD) for the data from the wireless network that matches the one or more configuration parameters via the API.

Statement 13. The UE of Statement 12, wherein the processor and the memory are further configured to identify one or more Internet Protocol (IP) flows from the wireless network that match the one or more configuration parameters.

Statement 14. The UE of Statement 13, wherein the processor and the memory are configured to identify the one or more IP flows comprises measuring the one or more IP flows from a default resource bearer provided by the wireless network.

Statement 15. The UE of Statement 13, wherein the processor and the memory are configured to identify the one or more IP flows by identifying all of the one or more IP flows sharing an API-provided resource bearer.

Statement 16. The UE of Statement 13, wherein the processor and the memory are configured to identify the one or more IP flows by measuring the one or more IP flows associated with one or more API-provided traffic flow templates (TFTs).

Statement 17. The UE of Statement 13, wherein the processor and the memory are configured to identify the one or more IP flows by measuring the one or more IP flows associated with one or more API-provided quality-of service flow indicator (QFI) on one of a default resource bearer provided by the wireless network, or an API-provided resource bearer.

Statement 18. The UE of Statement 12, wherein the processor and the memory are configured to activate out-of-order delivery for data by activating a Packet Data Convergence Protocol (PDCP) OOOD.

Statement 19. The UE of Statement 12, wherein the processor and the memory are configured to activate out-of-order delivery for data by using a first flag indicating OOOD activation follows a wireless network configuration; or

Statement 20. The UE of Statement 12, wherein the processor and the memory are configured to activate out-of-order delivery for data by using a second flag indicating OOOD activation follows configuration provided by the API.

Statement 21. The UE of Statement 12, wherein the processor and the memory are configured to determine if a number of duplicate TCP ACKs meets or exceeds a configured threshold.

Statement 22. The UE of Statement 12, wherein the processor and the memory are configured to deactivate OOOD in response to a number of duplicate downlink transport control protocol (TCP) acknowledgements (ACKs) meeting or exceeding a configured threshold.

Statement 23. A user equipment (UE) in a wireless network, comprising:
means for executing an application programming interface (API) in the UE to set one or more configuration parameters from the wireless network;
means for identifying data from the wireless network that matches the one or more configuration parameters via the API; and
means for activating out-of-order delivery (OOOD) for the data from the wireless network that matches the one or more configuration parameters via the API.

Statement 24. The UE of Statement 23, wherein the means for identifying of data from the wireless network comprises
means for identifying one or more Internet Protocol (IP) flows from the wireless network that match the one or more configuration parameters.

Statement 25. The UE of Statement 24, wherein the means for identifying the IP flows comprises one of
means for measuring the one or more IP flows from a default resource bearer provided by the wireless network,
means identifying all of the one or more IP flows sharing an API-provided resource bearer, or
means for measuring the one or more IP flows associated with one or more API-provided traffic flow templates (TFTs).

Statement 26. The UE of Statement 24, wherein the means for identifying the one or more IP flows comprises means for measuring the one or more IP flows associated with one or more API-provided quality-of service flow indicator (QFI) on one of a default resource bearer provided by the wireless network, or an API-provided resource bearer..

Statement 27. The UE of Statement 23, wherein the means for activating out-of-order delivery for data comprises a means for activating a Packet Data Convergence Protocol (PDCP) OOOD.

Statement 28. The UE of Statement 23, wherein the means for activating out-of-order delivery for data comprises one of:
means for using a first flag indicating OOOD activation follows a wireless network configuration; or
means for using a second flag indicating OOOD activation follows configuration provided by the API.

Statement 29. The UE of Statement 23, further comprising means for deactivating OOOD in response to a downlink transport control protocol (TCP) throughput on a bearer meeting or exceeding a configured threshold.

Statement 30. A non-transitory computer-readable medium having stored therein instructions executable by one or more processors of a user equipment (UE) in a wireless communication network to:
execute an application programming interface (API) in the UE to set one or more configuration parameters from the wireless network;
identify data from the wireless network that matches the one or more configuration parameters via the API; and
activate out-of-order delivery (OOOD) for the data from the wireless network that matches the one or more configuration parameters via the API.

## Claims

1. A method for an application executed in a user equipment, UE, to communicate with a wireless network, the method comprising:
setting one or more configuration parameters from the wireless network;
identifying (1104) data from the wireless network that matches the one or more configuration parameters; and
activating (1106) out-of-order delivery, OOOD, for the data from the wireless network that matches the one or more configuration parameters.

2. The method of claim 1, wherein the identifying of data from the wireless network comprises:
identifying one or more Internet Protocol, IP, flows from the wireless network that match the one or more configuration parameters.

3. The method of claim 2, wherein the identifying the one or more IP flows comprises measuring the one or more IP flows from a default resource bearer provided by the wireless network.

4. The method of claim 2, wherein the identifying the one or more IP flows comprises identifying all of the one or more IP flows sharing a specified resource bearer.

5. The method of claim 2, wherein the identifying the one or more IP flows comprises measuring the one or more IP flows associated with one or more specified traffic flow templates, TFTs.

6. The method of claim 2, wherein the identifying the one or more IP flows comprises measuring the one or more IP flows associated with one or more specified quality-of service flow indicator, QFI, on one of a default resource bearer provided by the wireless network, or another specified resource bearer.

7. The method of claim 1, wherein the activating out-of-order delivery for the data comprises activating a Packet Data Convergence Protocol, PDCP, OOOD.

8. The method of claim 1, wherein the activating out-of-order delivery for the data comprises using a first flag indicating OOOD activation follows a wireless network configuration.

9. The method of claim 1, wherein the activating out-of-order delivery for the data comprises using a second flag indicating OOOD activation follows a specified configuration.

10. The method of claim 1, further comprising deactivating OOOD in response to a downlink transport control protocol, TCP, throughput on a bearer meeting or exceeding a configured threshold.

11. The method of claim 1, further comprising deactivating OOOD in response to a number of duplicate downlink transport control protocol, TCP, acknowledgements, ACKs, meeting or exceeding a configured threshold.

12. A user equipment, UE, in a wireless network, the UE comprising:
means for setting one or more configuration parameters from the wireless network;
means for identifying (1104) data from the wireless network that matches the one or more configuration parameters; and
means for activating (1106) out-of-order delivery, OOOD, for the data from the wireless network that matches the one or more configuration parameters.

13. The UE of claim 12, wherein the means for identifying of data from the wireless network comprises:
means for identifying one or more Internet Protocol, IP, flows from the wireless network that match the one or more configuration parameters.

14. The UE of claim 13, wherein the means for identifying the IP flows comprises one of:
means for measuring the one or more IP flows from a default resource bearer provided by the wireless network; or
means identifying all of the one or more IP flows sharing a specified resource bearer; or
means for measuring the one or more IP flows associated with one or more specified traffic flow templates, TFTs; or
means for measuring the one or more IP flows associated with one or more specified quality-of service flow indicator, QFI, on one of a default resource bearer provided by the wireless network, or a specified resource bearer.

15. A non-transitory computer-readable medium having stored therein instructions executable by one or more processors of a user equipment, UE, in a wireless communication network to:
set one or more configuration parameters from the wireless network;
identify (1104) data from the wireless network that matches the one or more configuration parameters; and
activate (1106) out-of-order delivery, OOOD, for the data from the wireless network that matches the one or more configuration parameters.
